# DEMANDE DE BREVET EUROPEEN

(11) **EP 1 491 797 A1**
(43) Date de publication de la demande: **29.12.2004**
(21) Numéro de dépôt: 04291599.1
(22) Date de dépôt: 24.06.2004
(51) Int. Cl.: F16H 57/04

(54) **Implantation d'une pompe à huile dans une boîte de vitesses de véhicule automobile**

(30) Priorité: 25.06.2003 FR 0307675
(71) Demandeur: Peugeot Citroen Automobiles SA, 78140 Vélizy Villacoublay (FR)
(72) Inventeur: Lacote, Bertrand, 94100 Saint Maur des Fosses (FR); Quilichini, Bernard, 49770 La Membrolle sur Longuenee (FR)
(74) Mandataire: Thinat, Michel

(57) **Abrégé**

L'invention concerne l'implantation d'une pompe à huile (3) dans une boîte de vitesses de véhicule automobile.

La pompe à huile est montée dans le carter (1) de la boîte de vitesse, en étant entraînée en rotation par un pignon (S5) de l'arbre primaire (AP) ou de l'arbre secondaire (AS). Elle peut aussi être conçue pour que son corps (7) entoure l'un de ces arbres qui entraîne directement en rotation son rotor (5), le corps de pompe (7) étant alors immobilisé contre le carter (1). La pompe à huile est ainsi implantée à proximité des organes qu'elle doit lubrifier, ce qui contribue à améliorer la qualité de lubrification, et à simplifier son implantation dans le moteur du véhicule.

Cette implantation est adaptée à une boîte de vitesses ne comprenant initialement pas de pompe à huile, car elle nécessite peu de modifications du dimensionnement du carter.

## Description

L'invention concerne une boîte de vitesses de véhicule automobile, comprenant un carter, cette boîte de vitesses étant lubrifiée par une pompe à huile.

Dans un souci de respect de l'environnement, des normes imposent aux constructeurs automobiles de réduire le nombre de vidanges nécessaires à l'entretien d'un véhicule. Ces spécifications impliquent notamment d'améliorer la qualité de lubrification des boîtes de vitesses de ces véhicules, notamment au moyen d'une pompe à huile. Une telle pompe à huile est reliée au carter de boîte de vitesses pour aspirer l'huile en fond de carter et pour la diffuser sur les différents organes mobiles de la boîte de vitesses situés dans ce carter. Compte tenu des coûts élevés de conception d'une boîte de vitesses, les modifications de celle-ci en vue de sa lubrification par une pompe à huile doivent être minimales.

Dans une conception connue, la pompe à huile a son rotor entraîné en mouvement par une roue dentée appelée couronne de pont, située entre la boîte de vitesses et un différentiel, cette couronne de pont étant située à proximité d'organes d'embrayage du véhicule. La pompe à huile est plus particulièrement placée dans un logement prévu à cet effet dans une région située entre le carter de boîte de vitesses et le carter d'embrayage, en étant reliée au carter de boîte de vitesses par des tubulures ou canaux, pour l'aspiration et le refoulement de l'huile.

Cette conception nécessite une adaptation du carter d'embrayage et du carter de boîte de vitesses pour l'implantation de la pompe à huile, ainsi que l'implantation de tuyaux ou de canaux dans ces carters. D'autre part, l'adaptation du bloc moteur d'un type de véhicule à un autre type de véhicule conduit généralement à modifier la démultiplication, ce qui est réalisé en changeant le diamètre de la couronne de pont. La modification du diamètre de la couronne de pont implique de repositionner la pompe à huile pour que celle-ci soit entraînée par la couronne de pont, et il est également nécessaire de modifier le carter d'embrayage et le carter de boîte de vitesses pour positionner correctement la pompe à huile.

Le but de l'invention est de remédier à cet inconvénient en proposant une conception permettant de lubrifier une boîte de vitesses avec une pompe à huile tout en minimisant les modifications nécessaires à cette adaptation.

A cet effet, l'invention a pour objet une boîte de vitesses de véhicule automobile, cette boîte de vitesses étant lubrifiée par une pompe à huile, cette boîte de vitesses comprenant un carter, caractérisée en ce que la pompe à huile est montée à l'intérieur du carter. Il n'est ainsi pas nécessaire de modifier le carter d'embrayage pour implanter la pompe à huile, et une modification du diamètre de la couronne de pont n'induit pas de modification sur l'implantation de la pompe à huile. La pompe à huile est implantée à proximité des organes qu'elle doit lubrifier, ce qui contribue à simplifier son implantation dans le moteur du véhicule. La distance parcourue par l'huile entre le point d'aspiration et le point de refoulement est réduite, de sorte que les pertes de charge le sont également, ce qui permet de recourir à une pompe à huile de plus faible dimensionnement.

La pompe à huile peut avoir son rotor entraîné en rotation par un arbre primaire ou un arbre secondaire monté dans le carter. Avantageusement, ce rotor est entraîné par l'arbre qui occupe la position la plus basse dans le carter, pour faciliter l'aspiration d'huile en fond de carter.

Selon un premier mode de réalisation, la boîte de vitesses comprend un carter muni d'une ouverture fermée par un couvercle, et la pompe à huile est fixée à ce couvercle, ce qui permet d'accéder à la pompe à huile sans avoir à démonter l'ensemble de la boîte de vitesses. Avantageusement, la pompe à huile a son rotor entraîné en rotation par un pignon de la boîte de vitesses.

Selon un second mode de réalisation, la pompe à huile comprend un corps de pompe entourant l'arbre primaire ou l'arbre secondaire qui entraîne en rotation son rotor, et ce corps de pompe est immobilisé en rotation par le carter. La pompe à huile est ainsi placée entre deux pignons de l'un des arbres, ce qui réduit les modifications à apporter au carter. Avantageusement, le corps de pompe est immobilisé en rotation par le carter par l'intermédiaire d'un élastomère qui constitue une liaison mécanique élastique destinée à absorber les déformations que subit l'arbre.

L'invention sera maintenant décrite plus en détail, et en référence aux dessins annexés qui en illustrent une forme de réalisation à titre d'exemple non limitatif.

La figure 1 est une vue de face d'un carter de boîte de vitesses dans lequel est implantée une pompe à huile ;
- La figure 2 est une vue en section du carter de la figure 1 dans un plan comprenant la pompe à huile ;
- La figure 3 est une vue du couvercle par lequel la pompe à huile est fixée au carter 1 ;
- La figure 4 est une vue en coupe de la pompe à huile selon un plan comprenant l'axe du rotor de cette pompe à huile ;
- La figure 5 est une vue de face d'une pompe à huile rapportée sur un arbre de la boîte de vitesses ;
- La figure 6 est une vue en perspective des organes d'une boîte de vitesses équipée d'une pompe à huile qui entoure l'un des arbres ;
- La figure 7 est une vue en coupe partielle d'une boîte de vitesse selon l'invention ; et
- La figure 8 est une représentation d'un prolongement du corps de pompe pour son immobilisation contre le carter.

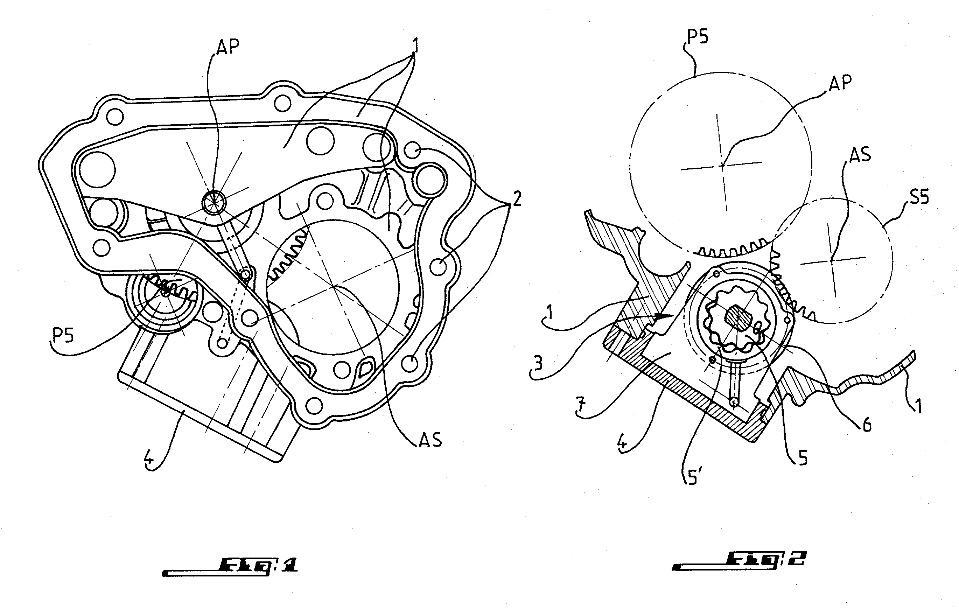

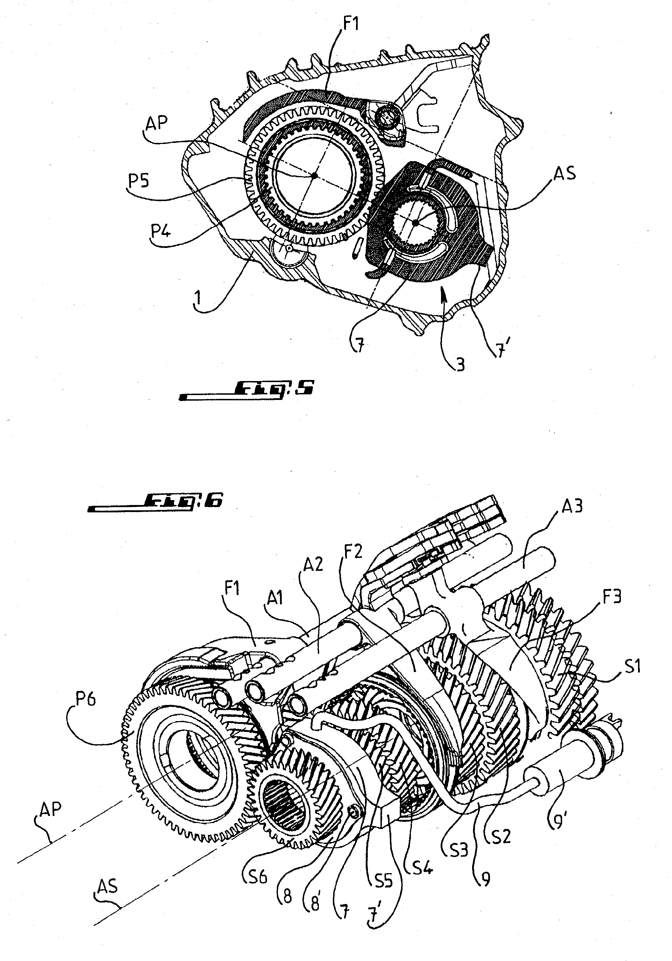

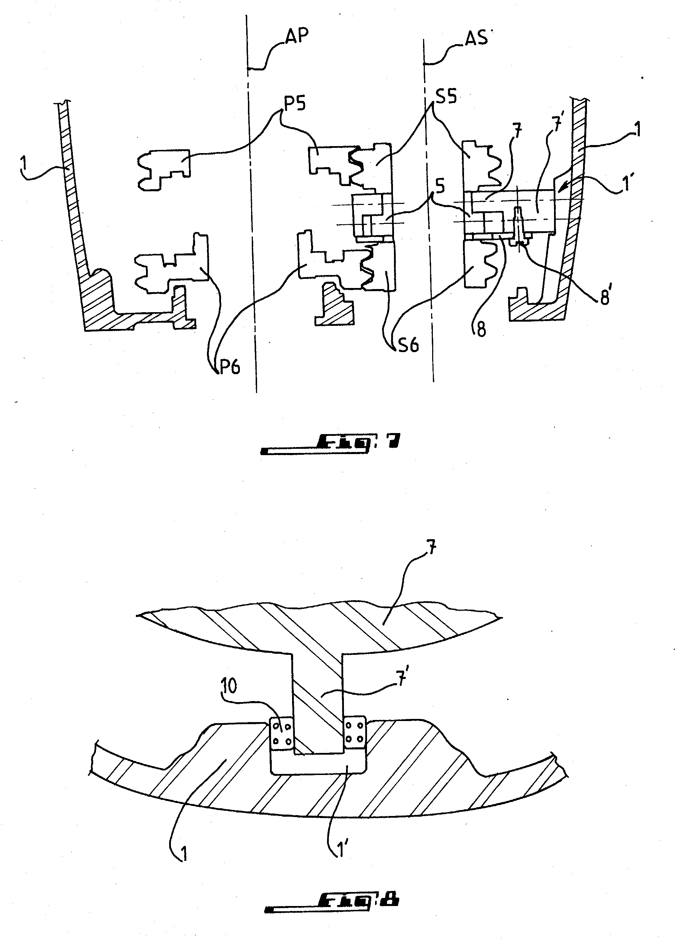

Figure 1, un carter 1 de boîte de vitesses comprend une face avant destinée à être recouverte par une plaque de fermeture non représentée, cette plaque de fermeture étant fixée au carter 1 par des vis qui se logent dans des trous taraudés 2. Ce carter entoure des organes de boîte de vitesses incluant un arbre primaire AP et un arbre secondaire AS parallèles l'un à l'autre, qui sont montés dans ce carter en s'étendent selon une direction normale à la face avant. Plusieurs pignons sont montés le long de chaque arbre et coopèrent pour assurer l'entraînement de l'arbre secondaire par l'arbre primaire selon un rapport de démultiplication sélectionné par l'utilisateur. Un pignon P5 correspondant au pignon primaire du cinquième rapport de cette boîte de vitesses apparaît partiellement dans la figure 5, les autres pignons n'étant pas représentés dans cette figure. La lubrification des pignons de cette boîte de vitesses est assurée par une pompe à huile 3 agencée pour aspirer de l'huile en partie inférieure du carter 1 et pour la diffuser sur les différents pignons de la boîte de vitesses.

Selon l'invention, la pompe à huile 3 est montée à l'intérieur du carter 1 pour être à proximité des organes à lubrifier, de sorte qu'il n'est pas nécessaire de prévoir des canaux particuliers dans le bloc moteur pour la relier au carter. D'autre part, cet emplacement de la pompe à huile permet de réduire les pertes de charges introduites par la distance parcourue par l'huile entre l'aspiration et le refoulement. Il est ainsi possible de prévoir une pompe à huile de plus faible puissance, ce qui en réduit le coût tout en assurant une lubrification satisfaisante. Compte tenu des faibles dimensions d'une pompe à huile, cette implantation nécessite une faible augmentation du volume interne du carter 1 correspondant à des modifications minimes de ce dernier.

Avantageusement, la pompe à huile comprend un rotor qui est entraîné en rotation par l'arbre primaire AP ou par l'arbre secondaire AS. Avantageusement, comme dans les exemples des figures, le rotor 4 est entraîné en rotation par l'arbre qui occupe la position la plus basse dans le carter 1, à savoir ici, l'arbre secondaire AS. La pompe à huile est ainsi placée en partie inférieur du carter, ce qui contribue à faciliter l'aspiration d'huile et l'amorçage de cette pompe à huile lors de la mise en rotation de son rotor. Le rotor de la pompe à huile peut comprendre un pignon d'entraînement de son rotor, engrené dans l'un des pignons montés sur l'arbre comme dans le premier mode de réalisation, mais elle peut aussi entourer l'arbre pour que son rotor soit directement entraîné par cet arbre, comme dans le second mode de réalisation, ces deux modes de réalisation étant détaillés dans la suite.

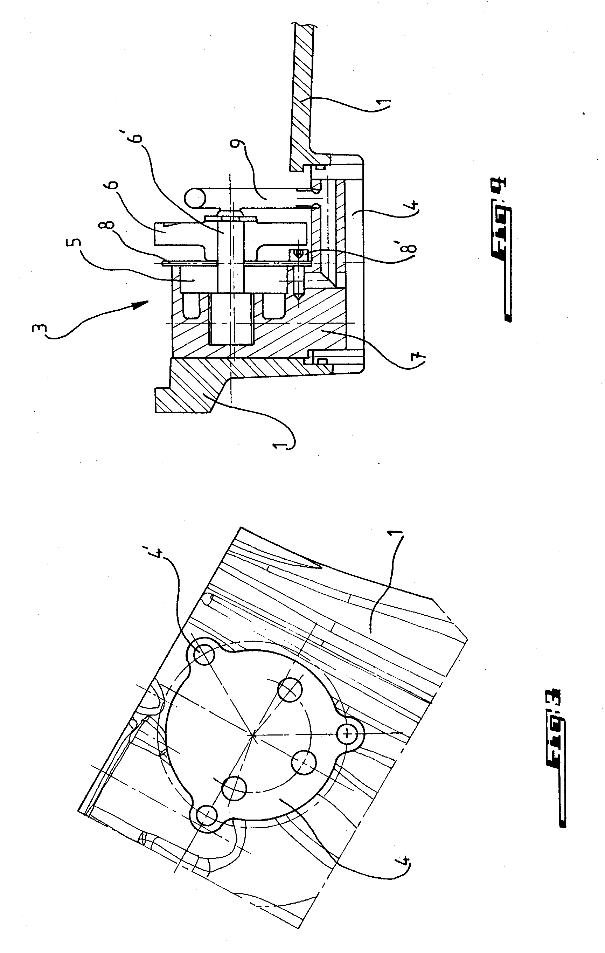

Dans le premier mode de réalisation qui correspond aux figures 1 à 4, la pompe à huile 3 est fixée du côté intérieur d'un couvercle 4 qui ferme une ouverture du carter 1. La pompe à huile 3 est ainsi positionnée dans le carter 1 tout en étant accessible depuis l'extérieur de celui-ci par simple démontage du couvercle 4. Le couvercle 4 dont la tranche est visible sur les figures 1 et 2 est un couvercle classique ayant une forme générale de disque, fixé au carter 1 par trois vis 4' à cent vingt degrés, comme visible figure 3. La pompe à huile peut ainsi être démontée sans avoir à démonter l'ensemble de la boîte de vitesses, ce qui simplifie les opérations de maintenance et d'entretien sur le véhicule. Comme visible dans les figures 1 et 2, la pompe à huile est en fait placée dans une cavité du carter 1. Cette cavité forme une protubérance cylindrique dirigée vers le bas du carter, et qui se termine par l'ouverture fermée par le couvercle 4. Cette cavité occupe un volume situé vers l'extérieur du carter 1, de sorte que l'implantation de la pompe à huile nécessite seulement de modifier le carter pour qu'il comprenne cette cavité, sans avoir à modifier l'agencement des organes internes de la boîte de vitesses.

Dans ce premier mode de réalisation, la pompe à huile comprend un rotor 5 solidaire d'un pignon d'entraînement 6 qui est engrené dans l'un des pignons de la boîte de vitesses. La figure 4 est une vue en coupe de la pompe à huile faisant apparaître un corps de pompe à huile 7 renfermant le rotor 5, ce corps de pompe à huile étant fermé par une plaque 8 fixée par trois vis 8' à cent vingt degrés. Le rotor 5 est monté sur un arbre 6' qui traverse la plaque 8 pour supporter le pignon d'entraînement 6 qui est situé hors du corps de pompe à huile 7, parallèlement à la plaque 8. Le pignon d'entraînement 6 a un diamètre légèrement supérieur aux dimensions externes de ce corps de pompe à huile de sorte que sa denture affleure du corps de pompe à huile pour faciliter son engrènement dans l'un des pignons de la boîte de vitesses. Dans l'exemple des figures, le pignon d'entraînement 6 est engrené dans le pignon secondaire du cinquième rapport S5, ce qui apparaît sur la figure 2, mais il pourrait aussi être engrené dans un autre pignon. Il convient de noter que compte tenu de phénomènes de frottements, l'ensemble des pignons de l'arbre secondaire tournent quel que soit le rapport sélectionné, de sorte que la pompe à huile fonctionne sans arrêt. Cette pompe à huile est reliée à une tubulure 9 qui diffuse sur les pignons de la boîte de vitesses l'huile aspirée. L'entraînement en rotation de la pompe à huile ne nécessite pas de modification importante de la boîte de vitesses, puisque cet entraînement est réalisé directement par un pignon existant de la boîte de vitesses. Le pignon d'entraînement 6 pourra avantageusement être en matériau plastique, ce qui donne lieu à des tolérances de montage plus larges pour faciliter encore l'implantation de la pompe à huile. Le choix d'un pignon d'entraînement en matière plastique permet également d'atténuer les bruits d'engrènement liés à d'éventuels défauts géométriques de denture ou à des défauts de positionnement de denture d'engrenage. Il contribue en outre à atténuer d'éventuels défauts d'acyclisme du moteur, notamment lors de changements de rapport. Le couvercle 4, le corps de pompe 7 et le pignon 6 constituent un module de pompe complet qui peut être assemblé séparément, avant d'être monté sur le carter 1.

Comme visible figure 2, la pompe à huile 3 est ici une pompe à huile de type excentrique. La périphérie externe de son rotor est munie de cannelures arrondies, ce rotor 5 coopère avec une couronne complémentaire 5' de plus grand diamètre, qui entoure le rotor 5 en pouvant tourner dans un alésage du corps de pompe à huile 7. Cette couronne 5' est munie de cannelures arrondies à sa périphérie interne et est montée excentrée par rapport au rotor. Les cannelures du rotor coopèrent avec celles de la couronne pour l'entraîner en rotation et pour former des cavités dont le volume varie durant la rotation du rotor pour obtenir un effet de pompage. Le choix d'une pompe à huile excentrique est avantageux pour l'implantation selon l'invention du fait de sa simplicité de conception qui lui confère de faibles dimensions, ce qui minimise encore les modifications à réaliser sur la boîte de vitesses.

Selon un second mode de réalisation, la pompe à huile entoure l'arbre primaire AP ou l'arbre secondaire AS qui entraîne ainsi son rotor 4 en rotation, le corps de pompe à huile 7 étant immobilisé en rotation par le carter 1. Dans l'exemple représenté figure 5, la pompe à huile 3 entoure l'arbre secondaire AS, de sorte qu'elle est placée en partie inférieure du carter 1 pour faciliter l'aspiration de l'huile qui est située en partie inférieure du carter 1. Cette pompe à huile 3 ayant de faibles dimensions, les modifications à apporter sont limitées à une légère augmentation de longueur de l'arbre primaire AP, de l'arbre secondaire AS, et du carter 1.

Dans ce mode de réalisation, la pompe à huile 3 est également une pompe à huile excentrique, dans laquelle le corps de pompe 7, la plaque 8 et le rotor 5 sont creux pour permettre le passage de l'arbre secondaire AS. Le perçage du rotor comprend par exemple des cannelures internes complémentaires de cannelures réalisées sur l'arbre secondaire pour assurer un accouplement en rotation de cet arbre secondaire avec le rotor. Comme représenté sur la figure 6, une tubulure 9 sort du corps de pompe pour se terminer par une crépine 9', destinée à l'aspiration d'huile en fond de carter.

Dans l'exemple de la figure 5, la pompe à huile 3 est située en extrémité de l'arbre secondaire AS, en avant des pignons primaires du quatrième et du cinquième rapport par rapport à la figure, repérés respectivement par P4 et P5. La figure 6 qui est une représentation en perspective fait mieux apparaître l'emplacement de la pompe à huile. L'arbre secondaire AS qui est entouré par les différents pignons secondaires repérés respectivement par S1, S2, S3, S4, S5 et S6 y est représenté en avant de l'arbre primaire AS. Ces différents pignons peuvent être déplacés longitudinalement par un ensemble d'actionneurs. Cet ensemble d'actionneurs inclut trois fourchettes F1, F2, F3 qui sont mobiles respectivement le long de trois axes A1, A2, A3 parallèles aux arbres primaire et secondaire. Comme visible dans cette vue en perspective, la pompe à huile 3 entoure l'arbre secondaire AS en étant située entre le pignon secondaire du sixième rapport S6 et le pignon secondaire du cinquième rapport S5. Le corps de pompe à huile 7 a des dimensions légèrement supérieures à celles des pignons qui sont situés de part et d'autre de la pompe à huile le long de l'arbre secondaire AS, ces pignons S5 et S6 étant les plus petits. Le pourtour du corps de pompe est ainsi à proximité de la surface interne du carter 1, ce qui simplifie l'implantation de moyens d'immobilisation du corps de pompe contre ce carter. L'emplacement de la pompe à huile entre les pignons secondaires des deux rapports les plus hauts de la boîte de vitesses, à savoir ici S5 et S6, se révèle avantageux du fait que ces pignons ont les plus faibles dimensions, de sorte que le pourtour du corps de pompe à huile 7 peut avoir des dimensions supérieures à celles du pignon afin de faciliter son immobilisation contre le carter sans avoir à augmenter de façon considérable les dimensions du corps de pompe à huile.

Dans ce mode de réalisation, le corps de pompe à huile 7 comprend avantageusement un prolongement 7' destiné à s'emboîter dans une cavité complémentaire 1' réalisée dans le carter 1 prévue pour immobiliser en rotation la pompe à huile 3. Cette cavité, visible figures 7 et 8, peut par exemple avoir une forme de rainure disposée parallèlement aux arbres primaire et secondaire, dans laquelle vient se loger le prolongement 7' durant le montage de la boîte de vitesses. Le montage de la pompe à huile consiste alors à la monter sur l'arbre secondaire entre le pignon S5 et le pignon S6, puis à monter cet arbre en plaçant le prolongement 7' dans la rainure 1'. L'immobilisation en rotation de la pompe à huile 3 est ainsi réalisé sans pièce supplémentaire, ce qui réduit le coût et simplifie le montage.

Comme représenté figure 8, le prolongement 7' a une longueur prévue pour que son extrémité ne soit pas en appui contre le fond de la cavité 1'. Cette caractéristique évite que les déformations de l'arbre primaire sous l'effet des efforts dans la boîte de vitesses ne se répercutent sur le corps de pompe à huile 7 et génèrent dans celui-ci des contraintes internes tendant à le détruire.

Avantageusement, un matériau élastomère 10 visible sur la figure 8 est placé entre l'extrémité du prolongement 7' et la cavité 1', pour minimiser encore l'influence des déformations de l'arbre secondaire AS sur le corps de pompe 7. En fonctionnement, l'arbre secondaire AS prend une forme courbe entre les deux appuis qui sont situés à ses extrémités. Cette déformation tend d'une part à rapprocher le prolongement 7' du fond de la cavité 1', mais elle tend aussi à incliner ce prolongement 7', ce qui contribue également à générer des contraintes dans le corps de pompe 7.

La mise en oeuvre de ce matériau élastomère 10 comme interface entre le prolongement 7' et le corps de pompe forme une liaison élastique entre le corps de pompe à huile et le carter 1, pour mieux absorber les déformations de l'arbre secondaire sans générer de contrainte dans le corps de pompe. Il contribue également à atténuer le bruit lors des changements de rapports qui modifient l'appui du prolongement 7' lors des changements de rapport. Ce matériau élastomère peut avantageusement être surmoulé sur l'extrémité du prolongement 7', de telle sorte qu'il est solidaire de celui-ci pour faciliter le montage de la pompe à huile. Avantageusement, le matériau élastomère est monté précontraint en compression afin d'assurer un rattrapage de jeu. Ce montage précontraint assure un contact permanent entre le prolongement 7' et le carter qui contribue à annuler les chocs entre le prolongement et le carter lors des changements de vitesse qui modifient l'appui du prolongement 7' sur le carter. Plus particulièrement, lorsque la boîte de vitesse est actionnée pour passer un rapport supérieur, le prolongement 7' est en appui vers la gauche sur la figure ce qui comprime la partie gauche de l'élastomère. Lorsque la boîte de vitesse est actionnée pour rétrograder, le prolongement 7' est en appui vers la droite sur la figure, ce qui comprime la partie droite de l'élastomère.

## Revendications

1. Boîte de vitesses de véhicule automobile, cette boîte de vitesses comprenant un carter (1) et étant lubrifiée par une pompe à huile (3) montée dans ce carter, **caractérisée en ce que** le carter (1) est muni d'une ouverture fermée par un couvercle (4), et **en ce que** la pompe à huile (3) est montée à l'intérieur du carter
(1) en étant fixée à ce couvercle (4).

2. Boîte de vitesses selon la revendication, comprenant un arbre primaire (AP) et un arbre secondaire (AS) montés dans le carter (1), dans laquelle la pompe à huile (3) comprend un rotor (5) qui est entraîné en rotation par l'arbre primaire (AP) ou par l'arbre secondaire (AS).

3. Boîte de vitesses selon la revendication 2, dans laquelle le rotor (5) de la pompe à huile (3) est entraîné en rotation par l'arbre secondaire (AS).

4. Boîte de vitesses selon la revendication 2 ou 3, dans laquelle la pompe à huile (3) comprend un pignon d'entraînement (6) de son rotor (5), ce pignon d'entraînement (6) étant engrené dans un pignon (S5) monté sur l'arbre primaire (AP) ou sur l'arbre secondaire (AS).

5. Boîte de vitesses de véhicule automobile, cette boîte de vitesses comprenant un carter (1) et étant lubrifiée par une pompe à huile (3) montée à l'intérieur de ce carter, **caractérisée en ce que** la pompe à huile (3) comprend un corps de pompe (7) entourant l'arbre primaire (AP) ou l'arbre secondaire (AS) et un rotor (5) qui est entraîné en rotation par cet arbre primaire (AP) ou par cet arbre secondaire (AS), et **en ce que** le corps de pompe (7) est immobilisé en rotation par le carter (1).

6. Boîte de vitesses selon la revendication 5, dans laquelle le corps de pompe (7) est immobilisé en rotation par le carter (1) au moyen d'un prolongement (7') de ce corps de pompe (7), une extrémité de ce prolongement (7') étant emboîtée dans une cavité complémentaire (1') du carter (1).

7. Boîte de vitesses selon la revendication 6, dans laquelle un matériau élastomère est surmoulé en extrémité du prolongement (7') pour former avec la cavité complémentaire (1') une liaison mécanique élastique.

8. Boîte de vitesses selon l'une des revendications 1 à 7, dans laquelle la pompe à huile (3) est de type excentrique.
